# EUROPÄISCHE PATENTANMELDUNG

(11) **EP 0 537 780 A2**
(43) Veröffentlichungstag der Anmeldung: **21.04.1993**
(21) Anmeldenummer: 92117750.7
(22) Anmeldetag: 14.10.1992
(51) Int. Cl.: B29D 30/42, B29D 30/70

(54) **Verfahren zur Herstellung einer Wickelbandage für einen Fahrzeugluftreifen**

(30) Priorität: 17.10.1991 DE 4134323
(71) Anmelder: Continental Aktiengesellschaft, D-30165 Hannover (DE)
(72) Erfinder: Flebbe, Werner, W-3057 Neustadt (DE); Frerichs, Udo, W-3012 Langenhagen 8 (DE); Johannes, Günter, W-3008 Garbsen 2 (DE); Kachel, Uwe, W-3174 Meine (DE); Knauf, Werner, W-3050 Wunstorf 1 (DE); Peda, Karl, W-3050 Wunstorf 1 (DE); Petersmann, Norbert, Dr., W-3000 Hannover 91 (DE)

(57) **Zusammenfassung**

Die Erfindung bezieht sich auf ein Verfahren zur Herstellung einer durch Spulen eines Cordstreifens mit in Längsrichtung verlaufenden Fäden erzeugten Wickelbandage für einen Fahrzeugluftreifen. Um keine Zeitverzögerungen bei der Konfektionierung eines Reifens eintreten zu lassen, wird vorgeschlagen, daß zunächst auf einer separaten breiten Wickeltrommel eine Bandage gewünschten Aufbaus in Überbreite gewickelt wird und anschließend daraus Bandagenstreifenringe gewünschter Breite geschnitten werden.

## Beschreibung

Die Erfindung betrifft ein Verfahren zur Herstellung einer durch Spulen eines Cordstreifens mit in Längsrichtung verlaufenden Fäden erzeugten Wickelbandage für einen Fahrzeugluftreifen.

Bekannte Fahrzeugluftreifen werden in der modernen Fertigung im sogenannten Zwei-Stufen-Verfahren hergestellt, d.h. es wird zunächst auf einer ersten Wickeltrommel der Karkaßkörper erzeugt und gleichzeitig auf einer separaten Gürteltrommel das Gürtellagenpaket hergestellt. Anschließend werden beide Pakete auf der Bombierstation durch Hineinbombieren der Karkasse in den Gürtel zusammengeführt. Nach dem Auflegen der Gürtellagen werden auf der Gürteltrommel Abdecklagen unterschiedlichster Art z.B. in Form von Wickelbandagen aufgebracht. Dabei können diese Wickelbandagen sich ausschließlich im Gürtelrandbereich befinden oder aber den Gürtel in seiner vollen Breite abdecken. Zur Erzeugung der Wickelbandage wird ein schmaler Cordstreifen schraubenförmig oberhalb der Gürtellagen aufgewickelt, wobei je nach Bedarf benachbarte Windungen dicht an dicht oder sich überlappend angeordnet sein können. Bei dieser Fertigung entstehen Zeitverluste dadurch, daß die Erzeugung eines Gürtelpakets und vor allem der sich anschließenden Wickelbandage einen hohen Zeitaufwand benötigt, während der Karkaßkörper schneller gefertigt werden kann. Ein weiterer Nachteil besteht darin, daß im Bereich der Gürtelaufbaustation ein zusätzlicher Platzbedarf für die Wickelvorrichtung zur Erzeugung der Wickelbandage erforderlich wird.

Der Erfindung liegt deshalb die Aufgabe zugrunde, ein Verfahren anzugeben, mit dem keine Zeitverzögerungen bei der Konfektionierung eines Reifens eintreten und bei dem die geschilderten Platzprobleme nicht mehr vorhanden sind.

Diese Aufgabe wird erfindungsgemäß dadurch gelöst, daß zunächst auf einer separaten breiten Wickeltrommel eine Bandage gewünschten Aufbaus in Überbreite gewickelt wird und anschließend daraus Bandagenstreifenringe gewünschter Breite geschnitten werden.

Mit der Erfindung wird der Vorteil erzielt, daß eine Produktion von Wickelbandagenringen auf Vorrat und eine Zwischenlagerung dieser Ringe möglich ist, so daß sie bei Bedarf in ausreichender Anzahl zur Verfügung stehen. Diese Wickelbandagenringe werden nach der Erzeugung des Gürtellagenpakets über die Gürtellagen geschoben, bis sie die gewünschte Prosition erreicht haben. Ein besonderer Vorteil des erfindungsgemäßen Verfahrens liegt darin, daß danach erzeugte Wickelbandagenringe nicht mehr zu Unrundheiten im Reifen führen. Durch das schneiden von Ringen in der exakten Umfangsrichtung der Trommel können die durch den Anfang und das Ende des gewickelten Cordstreifens verursachten Unstetigkeitsstellen weggeschnitten werden.

Als Material für den Cordstreifen kommt üblicher gummierter Nyloncord in Frage, wobei der Streifen zwischen 5 und 25 mm breit sein kann und die in Längsrichtung verlaufenden Fäden in einer Dichte von 6 bis 15 Fäden pro 10 mm Streifenbreite vorhanden sein können. Es ist jedoch selbstverständlich auch möglich, für den Cordstreifen anders Material z.B. Metallcord vorzusehen.

Nachfolgend wird das Verfahren anhand einer Zeichnung näher erläutert. Es zeigt
- Fig. 1: eine Wickeltrommel mit einem dicht an dicht aufgewickelten Cordstreifen in einer Seitenansicht,
- Fig. 2: eine Wickeltrommel mit einem aufgewickelten Cordstreifen, bei dem benachbarte Windungen sich überlappen, in einem radialen Teilschnitt,
- Fig. 3: eine Wickeltrommel mit einer aufgeschobenen Kunststoffhülse und einem zweilagig gewickelten Cordstreifen in einem radialen Teilschnitt,
- Fig. 4: einen Fahrzeugluftreifen mit einer Wickelbandage aus drei Bandagenringen in einem radialen Teilschnitt.

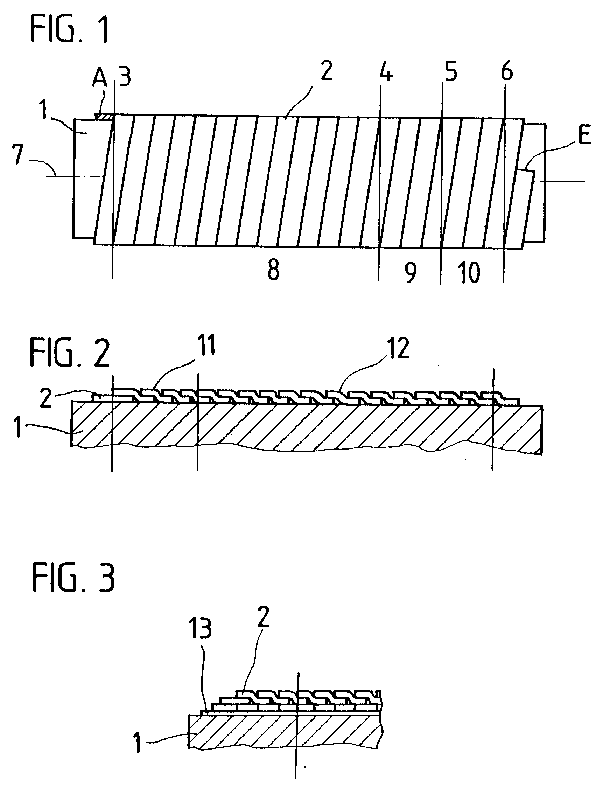

In Fig. 1 ist eine Wickeltrommel 1 dargestellt, auf der ein Cordstreifen 2 zu einem Wickelbandagenkörper übergroßer Breite gewickelt worden ist. Das Wickeln des Cordstreifens 2 erfolgt dabei in der Weise, daß beginnend mit dem Streifenanfang A schraubenförmig gewickelt wird, so daß benachbarte Windungen des Streifens 2 dicht an dicht aneinanderliegen. Der Steigungswinkel beim Wickeln des Cordstreifens 2 wird dabei von der Streifenbreite bestimmt. Nach dem Wickeln des Bandagenkörpers werden durch mehrere Schnitte 3, 4, 5 und 6 senkrecht zur Achse 7 der Wickeltrommel 1 einzelne Bandagenstreifenringe 8, 9 und 10 gewünschter Breite erzeugt. Mit den Schnitten 3 und 6 werden die durch den Streifenanfang A und durch das Streifenende E bedingten Unstetigkeitsstellen in Umfangsrichtung weggeschnitten, so daß die Wickelbandagenrnge 8, 9 und 10 an allen Stellen des Umfangs eine gleiche Massenverteilung aufweisen und damit bei der Verwendung in einem Reifenrohling keine Rundlaufprobleme hervorrufen können.

In Fig. 2 ist eine Wickeltrommel 1 mit einem aufgewickelten Cordstreifen 2 dargestellt, bei dem benachbarte Windungen des Streifens 2 sich überlappen. Durch diese Anordnung wird der Steigungswinkel der einzelnen Windungen in etwa halbiert und man erhält in einem Arbeitsgang praktisch zwei übereinanderliegende Materiallagen. Nach dem vollständigen Wickeln des Cordstreifens 2 werden wiederum senkrechte Schnitte angebracht, mit denen der Bandagenkörper in gebrauchsfertige Bandagenstreifenringe 11 und 12 unterteilt wird.

Das Beispiel der Fig. 3 unterscheidet sich von den vorstehend beschriebenen Beispielen dadurch, daß auf ein und derselben Wickeltrommel 1 zunächst eine Lage eines Cordstreifens 2 mit dicht an dicht liegenden Windungen gewickelt wird und daß darüber eine Lage mit sich überlappenden Windungen gewickelt wird. Anschließend erfolgt wiederum durch die Anbringung vertikaler Schnitte eine Aufteilung in Bandagenstreifenringe gewünschter Breite. Beim Beispiel der Fig. 3 befindet sich zwischen der Wickeltrommel 1 und dem aufgewickelten Cordstreifen 2 eine Kunststoffhülse 13, die vor Beginn des Wickelns auf die Wickeltrommel 1 geschoben wird. Diese Kunststoffhülse 13 dient den von der Wickeltrommel 1 zu entfernenden Bandagenstreifenringen als unterstützender Träger. Selbstverständlich kann der Cordstreifen 2 auch in einer anderen Schichtenfolge und in noch mehr Lagen, auch gekreuzt, aufgewickelt werden, je nachdem welchen Aufbau man für die fertige Wickelbandage wünscht.

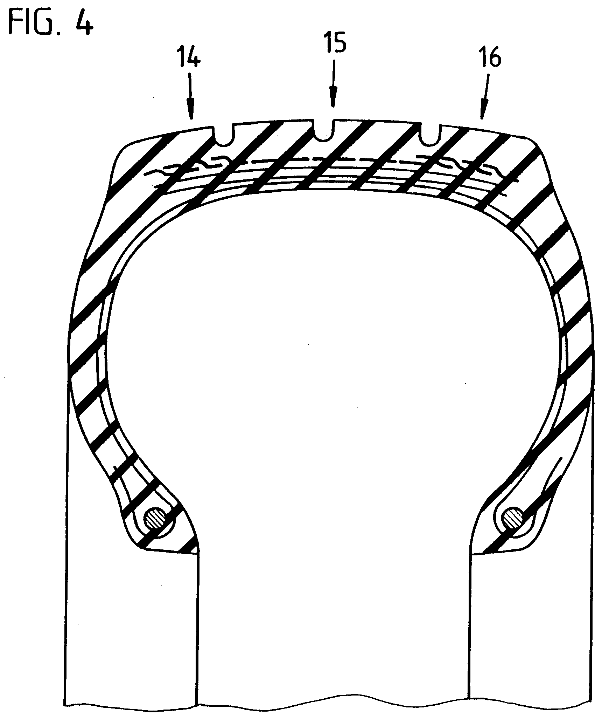

Nach dem Herstellen von Wickelbandagenstreifenringen gewünschter Breite in der vorstehend beschriebenen Weise werden diese Ringe von der Wickeltrommel 1 entfernt und der Reifenaufbaustation mit der Gürteltrommel zugeführt. Dort werden sie auf die bereits aufgelegten Gürtellagen aufgeschoben und in ihre endgültige Postition gebracht. Fig. 4 zeigt einen auf diese Weise erzeugten Fahrzeugluftreifen mit einer Wickelbandage, die aus drei Bandagenstreifenringen 14, 15 und 16 besteht. Dabei sind die Bandagenstreifenringe 14 und 16 im wesentlichen so aufgebaut wie im Beispiel der Fig. 2 beschrieben, während der Bandagenstreifenring 15 aus dicht an dicht liegenden Windungen eines Cordstreifens 2 besteht, wie es im Beispiel der Fig. 1 erläutert worden ist.

## Patentansprüche

1. Verfahren zur Herstellung einer durch Spulen eines Cordstreifens mit in Längsrichtung verlaufenden Fäden erzeugten Wickelbandage für einen Fahrzeugluftreifen,
**dadurch gekennzeichnet,**
daß zunächst auf einer separaten breiten Wickeltrommel eine Bandage gewünschten Aufbaus in Überbreite gewickelt wird und anschließend daraus Bandagenstreifenringe gewünschter Breite geschnitten werden.

2. Verfahren nach Anspruch 1, dadurch gekennzeichnet, daß die Schnitte für die Bandagenstreifen senkrecht zur Achse der Wickeltrommel verlaufen.

3. Verfahren nach Anspruch 1, dadurch gekennzeichnet, daß der Cordstreifen schraubenförmig und einlagig derart auf der Wickeltrommel gewickelt wird, daß benachbarte Windungen des Cordstreifens dicht an dicht liegen.

4. Verfahren nach Anspruch 1, dadurch gekennzeichnet, daß der Cordstreifen derart auf der Wickeltrommel gewickelt wird, daß sich benachbarte Windungen des Cordstreifens überlappen.

5. Verfahren nach Anspruch 1, dadurch gekennzeichnet, daß der Cordstreifen mehrlagig auf der Wickeltrommel, gleichgerichtet oder gekreuzt, gewickelt wird.

6. Verfahren nach Anspruch 5, dadurch gekennzeichnet, daß in einer ersten Lage ein Cordstreifen dicht an dicht gewickelt wird und in einer weiteren Lage in sich überlappender Anordnung.

7. Verfahren nach Anspruch 1, dadurch gekennzeichnet, daß die Wickelbandage auf einer Kunststoffhülse gewickelt wird, die vorher auf die Wickeltrommel geschoben wird.

8. Fahrzeugluftreifen mit einer nach dem Verfahren nach Anspruch 1 erzeugten Wickelbandage.
